# FASCICULE DE BREVET EUROPEEN

(11) **EP 1 590 078 B1**
(45) Date de publication et mention de la délivrance du brevet: **21.07.2010**
(21) Numéro de dépôt: 04707549.4
(22) Date de dépôt: 03.02.2004
(51) Int. Cl.: B01J 13/18, A01N 25/28

(54) **FABRICATION DE MICROBILLES DE PESTICIDES ET UTILISATION DE CES MICROBILLES DANS LA PROTECTION DES CULTURES.**
HERSTELLUNG VON MIKROKUGELN VON PESTIZIDEN UND SEINE VERWENDUNG ZUM SCHÜTZEN VON KULTUREN
PRODUCTION OF MICROBEADS OF PESTICIDES AND USE OF SAID MICROBEADS FOR THE PROTECTION OF CROPS

(30) Priorité: 07.02.2003 FR 0301457
(43) Date de publication de la demande: 02.11.2005
(73) Titulaire: CEREXAGRI S.A., 78370 Plaisir (FR)
(72) Inventeur: VANDENABEELE, Marie, F- 69300 CALUIRE ET CUIRE (FR); JOSSELIN, Pierre, F-27950 Saint-Marcel (FR); BORNET, Gérard, F-27200 Vernon (FR); JONCHERAY, Gérard, F-27200 Vernon (FR); EVERAERE, Kathelyne, 5300 Andenne (BE)
(74) Mandataire: Martin, Didier Roland Valéry
(86) Numéro de dépôt international: PCT/FR2004/000239
(87) Numéro de publication internationale: WO 2004/078340

(56) Documents cités:
- EP-A- 0 008 207
- WO-A-98/28975
- US-A- 3 577 515
- US-A- 4 534 783

## Description

La présente invention concerne le domaine phytosanitaire et a plus particulièrement pour objet la fabrication de microbilles imprégnées d'un pesticide partiellement soluble dans l'eau, tel que le méthomyl, et l'utilisation de ces microbilles dans la protection des cultures.

La microencapsulation de matières actives phytosanitaires insolubles dans l'eau est une technique développée de longue date. Par microencapsulation, on entend le fait d'enfermer une matière active liquide, ou rendue liquide par l'ajout d'un solvant, à l'intérieur d'une microcapsule creuse dite "capsule réservoir" laquelle est donc constituée d'un coeur liquide et d'un corps creux solide qui s'apparente à un minuscule ballon rempli de ce liquide, ou encore le fait d'enfermer une matière active à l'intérieur d'une microbille pleine qu'elle imprègne alors totalement.

Dans le domaine phytosanitaire, la microencapsulation est appliquée, la plupart du temps, à des matières actives insecticides, quoique des matières actives à visée biologique différente aient également été parfois microencapsulées. Il s'agit de conférer à des matières actives extrêmement toxiques et nocives, par le biais d'une formulation judicieuse, une toxicité moindre qui écarte tout risque majeur pour l'utilisateur, et une rémanence certaine qui permet de diminuer notablement les fréquences de traitement.

Le procédé le plus connu est indiscutablement la microencapsulation par polymérisation interfaciale à partir d'une émulsion huile dans eau (brevet US 3 577 515 et WO-A-9 828 975). Plusieurs produits commerciaux sont aujourd'hui fabriqués sur ce principe par diverses firmes phytosanitaires. De nombreuses variantes et améliorations ont été apportées au procédé du brevet précité, mais toutes se heurtent à la même limitation: seules les matières actives insolubles dans l'eau peuvent être microencapsulées avec succès par cette technique.

La microencapsulation de matières actives totalement ou partiellement solubles dans l'eau a fait l'objet de plusieurs brevets, mais rares sont ceux relatifs au domaine des matières actives à visée phytosanitaire; on peut néanmoins citer le brevet EP 0 148 169 concernant la microencapsulation du glyphosate et quelques brevets sur la microencapsulation du méthomyl (GB 2 027 346, EP 4758, US 4 235 872, US 4 282 209, US 4 722 838). Cependant, il n'existe aujourd'hui aucun produit commercial constitué d'une suspension de microcapsules ou de microbilles d'une matière active phytosanitaire soluble ou partiellement soluble dans l'eau.

Un exemple typique de matière active phytosanitaire partiellement soluble dans l'eau est le méthomyl, un insecticide de la classe des carbamates actuellement commercialisé en solution hydroalcoolique sous le nom de Lannate^{®} 20L par la société E.I. du Pont de Nemours and Co. Le méthomyl occupe à l'heure actuelle une place essentielle parmi les préparations insecticides destinées au traitement des plants de coton. Il permet par ailleurs de contrôler de nombreuses variétés d'insectes (notamment lépidoptères, hémiptères, diptères, et coléoptères) et les araignées rouges (ou acariens) dans les cultures fruitières, les vignes, les oliviers, le houblon, les légumes d'ornement, les cucurbitacées, le lin, le tabac, les pousses de soja, etc... Il est également utilisé pour le contrôle des insectes volants dans les poulaillers et les bâtiments d'élevage.

Le méthomyl qui est une matière active hautement toxique, agit de façon laminaire sur la plante et a donc une action systémique. Il est réputé pour son effet choc, mais son efficacité est de faible durée dans le temps, notamment parce que le méthomyl se dégrade lorsqu'il est exposé aux rayons UV émis par le soleil. Bien que sa solubilité dans l'eau soit faible, elle n'est pas négligeable (58 g/l à 20°C) et ce niveau de solubilité interdit l'encapsulation du méthomyl par la voie classique (procédé "huile dans eau" du brevet US 3 577 515) car une partie du méthomyl diffuse hors des capsules jusqu'à atteindre la solubilité maximum de cette matière active dans l'eau.

Il a maintenant été trouvé que, par polycondensation d'une paire de réactifs organiques complémentaires placés dans une première et une seconde phases liquides non miscibles, il est possible d'encapsuler les gouttelettes du premier liquide contenant en solution le méthomyl (ou tout autre pesticide au moins partiellement soluble dans l'eau) dans des microbilles résultant du polycondensat formé et d'obtenir ainsi des microbilles chargées de méthomyl (ou autre pesticide au moins partiellement soluble dans l'eau) et ne présentant pas de tendance à s'agglomérer ou à coalescer entre elles. La phase liquide continue dans laquelle sont obtenues les microbilles n'étant pas solvant du méthomyl (ou autre pesticide), elle assure le maintien de la matière active dans les microbilles aussi longtemps que nécessaire.

La présente invention a donc pour premier objet un procédé de fabrication de microbilles d'un pesticide au moins partiellement soluble dans l'eau par polycondensation de réactifs organiques complémentaires R¹ et R² dans un système biphasique liquide, le ou les réactif(s) R¹ étant placé(s) avec le pesticide dans une phase liquide polaire (ϕₚ) et le ou les réactif(s) R² étant placé(s) dans une phase liquide huileuse (ϕₕ) comprenant un solvant (S) non miscible à la phase polaire et au moins un agent tensio-actif permettant sous agitation la mise en dispersion de la phase polaire (ϕ_{P}) dans ladite phase huileuse (ϕₕ), caractérisé en ce que le couple de réactifs R¹ et R² est choisi de telle sorte que la polycondensation se produit dans la phase liquide polaire (ϕₚ).

Bien que le procédé selon l'invention vise plus particulièrement la fabrication de microbilles de méthomyl, il peut s'appliquer à tout pesticide au moins partiellement soluble dans l'eau, c'est-à-dire à tout pesticide dont la solubilité dans l'eau à 25°C est supérieure ou égale à 1 g/l. Comme exemples de tels pesticides, on peut mentionner plus particulièrement le glyphosate et l'aminotriazole.

Au lieu d'utiliser la matière active elle-même, on peut utiliser une solution de cette matière active dans un solvant polaire ou un mélange de tels solvants; ainsi, par exemple dans le cas du méthomyl, on peut employer directement le Lannate^{®} 20L comme phase polaire.

Le polycondensat selon l'invention peut être choisi dans le groupe comprenant les polyamides, les polysulfonamides, les polycarbonates, les polyesters, les polyuréthanes et les polyurées, et est de préférence un polyuréthane ou une polyurée.

Dans la première phase liquide (ϕₚ), dénommée "phase polaire", le solvant peut être l'eau ou un solvant polaire tel que le méthanol, l'éthanol, le diméthylsulfoxyde, la N-méthylpyrrolidone, les esters dibasiques (DBE) ou un mélange de ces composés entre eux et/ou avec l'eau, de préférence le méthanol seul ou en mélange avec l'eau.

Le solvant (S) de la seconde phase liquide (ϕₕ), dénommée "phase huileuse", est avantageusement une huile végétale ou minérale, de préférence une huile aliphatique ne contenant pas ou peu de composés aromatiques et, plus particulièrement, une huile blanche non aromatique.

Les deux phases liquides sont telles qu'elles sont non miscibles et que la présence d'un ou de plusieurs tensio-actifs appropriés dans la phase huileuse permet de réaliser, par quelque moyen d'agitation que ce soit, la formation d'une émulsion dans laquelle la phase polaire est dispersée sous forme de gouttelettes (phase dispersée) dans la phase huileuse (phase continue ou dispersante). Le couple de réactifs R¹ et R² est choisi de telle sorte que la solubilité du ou des réactif(s) R² dans la phase liquide polaire (ϕₚ) est supérieure à la solubilité du ou des réactif(s) R¹ dans le solvant (S). Le ou les réactif(s) R² migre(nt) de la phase huileuse vers l'intérieur des gouttelettes constituées par la phase polaire dispersée avec une vitesse de migration telle que la polycondensation se produit en solution dans les gouttelettes et conduit à la formation de microbilles de polycondensat imprégnées de la phase polaire et du pesticide qu'elle contient, par exemple le méthomyl.

Un mode de réalisation préféré du procédé selon l'invention consiste:
(a) à préparer une phase liquide polaire (ϕₚ) en mélangeant le pesticide et le ou les réactif(s) R¹ dans l'eau et/ou un solvant polaire, puis
(b) à disperser sous agitation cette phase liquide polaire (ϕₚ) dans une solution huileuse (ϕₕ₁) du ou des agent(s) tensio-actif(s) dans le solvant (S) non miscible à la phase polaire, et
(c) à introduire dans la dispersion agitée une solution huileuse (ϕₕ₂) du ou des réactif(s) R² provoquant ainsi la polycondensation.

Dans certains cas, notamment quand les réactifs R¹ et R² sont introduits en proportions proches de la stoechiométrie (exprimée en nombre de moles de fonctions réactives), il n'est pas nécessaire d'avoir recours à deux solutions huileuses (ϕₕ₁) et (ϕₕ₂) pour constituer la phase huileuse (ϕₕ) et il suffit de disperser sous agitation la phase liquide polaire (ϕₚ) de l'étape (a) dans une phase huileuse unique (ϕₕ) obtenue en mélangeant le ou les agent(s) tensio-actif(s) et le ou les réactif(s) R² dans le solvant (S) non miscible à la phase polaire.

La polycondensation particulière selon l'invention est rendue possible par le choix judicieux du ou des réactifs R¹ et R² placés respectivement dans la phase polaire dispersée et dans la phase huileuse. La solubilité des réactifs R¹ dans la phase polaire doit être excellente. Les réactifs R² utilisés doivent avoir une bonne solubilité dans la phase huileuse, et conformément à la présente invention leur solubilité dans la phase liquide polaire est supérieure à la solubilité des réactifs R¹ dans le solvant (S). La vitesse de réaction entre les réactifs R¹ et R² étant faible devant la vitesse de migration de R² dans la phase polaire, ces dits réactifs R² diffusent au sein des gouttelettes de phase polaire et s'y polycondensent avec les réactifs R¹ en solution dans la gouttelette, ceci ayant pour résultat la formation d'une microbille de polycondensat imprégnée de la phase polaire et du pesticide qu'elle contient, par exemple le méthomyl. On obtient ainsi une suspension de microbilles dans le solvant (S).

Parmi les couples de réactifs R¹ et R² utilisables dans le procédé de fabrication de microbilles selon l'invention, on peut mentionner plus particulièrement:
- des diamines et/ou polyamines dans l'une des phases, et des diisocyanates et/ou polyisocyanates dans l'autre phase, les microbilles résultantes étant alors en polyurée;
- des diols et/ou polyols dans l'une des phases, et des diisocyanates et/ou polyisocyanates dans l'autre phase, les microbilles résultantes étant alors en polyuréthane;
- des diamines et/ou polyamines dans l'une des phases, et des dichlorures et/ou polychlorures d'acides dans l'autre phase, les microbilles résultantes étant alors en polyamide;
- des diols et/ou polyols dans l'une des phases, et des dichlorures et/ou polychlorures d'acides dans l'autre phase, les microbilles résultantes étant alors en polyester;
- des diamines et/ou polyamines dans l'une des phases, et des chlorures de disulfonyle et/ou de polysulfonyle dans l'autre phase, les microbilles résultantes étant alors en polysulfonamide.

Bien que cela ne soit pas indispensable, on préfère travailler avec des couples de réactifs R¹ et R² dont l'un au moins comprend plus de deux fonctions réactives.

On ne sortirait pas du cadre de la présente invention en utilisant un mélange de réactifs R¹ de types différents et/ou un mélange de réactifs R² de types différents. Ainsi, par exemple, on formera des microbilles en polyuréthane-polyurée en utilisant un mélange amines/alcools en face d'isocyanates.

Dans le cadre de la présente invention, on peut utiliser toute diamine ou polyamine susceptible de se polycondenser avec un di- ou polyisocyanate, avec un di- ou polychlorure d'acide ou avec un chlorure de di- ou polysulfonyle pour former respectivement une polyurée, un polyamide ou un polysulfonamide. Comme exemples non limitatifs de diamines ou polyamines adaptées au procédé selon l'invention, on peut citer l'éthylènediamine, les diaminopropanes, les diaminobutanes, l'hexaméthylènediamine, la diéthylènetriamine, la tris(2-aminoéthyl)amine, la 2,4,6-triaminopyrimidine, la pipérazine, la tétraéthylènepentamine, les di- et polyamines oxyalkylées telles que celles connues sous la dénomination Jeffamine^{®} de la société HUNTSMAN Corporation ou sous la dénomination PC Amine DA de la société NITROIL, notamment les polyoxypropylènediamines Jeffamine^{®} D-230 et Jeffamine^{®} D-400 ou leurs homologues PC Amine DA 250 et PC Amine DA 400, les polyéthylèneglycoldiamines Jeffamine^{®} 600 et Jeffamine^{®} 900, la triéthylèneglycol-diamine Jeffamine^{®} EDR-148 et la polyoxypropylènetriamine Jeffamine^{®} T-403.

Comme exemples non limitatifs de diols ou de polyols polycondensables avec un di- ou polyisocyanate ou avec un di- ou polychlorure d'acide pour former un polyuréthane ou un polyester, on peut citer les butanediols, les pentanediols, le 2-éthylhexanediol, le di- ou tri(éthylèneglycol), le di- ou tri(propylèneglycol), le pentaérythritol, le triméthylolpropane et le pyrogallol.

Comme exemples non limitatifs de diisocyanates ou de polyisocyanates adaptés au procédé selon l'invention, on peut citer l'hexaméthylène diisocyanate, l'isophorone diisocyanate, le dicyclohexylméthane diisocyanate, le polyisocyanate aliphatique à base d'isophorone diisocyanate (Desmodur^{®} Z 4470 SN de la société BAYER) et les polyisocyanates aliphatiques à base d'hexaméthylène diisocyanate (Desmodur^{®} N100, Desmodur^{®} N3200 et Desmodur^{®} N3300 de la société BAYER).

Comme exemples non limitatifs de di- ou polychlorures d'acides, on peut citer le chlorure de sébaçoyle, le chlorure de téréphtaloyle, le chlorure d'adipoyle et le chlorure de trimésoyle.

Comme exemples non limitatifs de chlorures de di- ou polysulfonyle, on peut citer le chlorure de benzène-1,3-disulfonyle et le chlorure de benzène-1,3,5-trisulfonyle.

L'un des avantages du procédé selon l'invention est de permettre l'utilisation de réactifs extrêmement variés, dans leur nature chimique ou, pour une même famille de composés, dans leur structure chimique, et de pouvoir les placer à volonté dans l'une ou l'autre des phases liquides selon ce qui apparaît le plus approprié, le plus simple ou le moins coûteux. La solubilité des différents réactifs potentiels dans l'une et l'autre des deux phases constitue un critère majeur dans le choix des réactifs et dans la définition de la phase qui les accueillera. Ainsi, par exemple, si l'on veut fabriquer des microbilles en polyurée, on utilisera un ou plusieurs diisocyanates ou polyisocyanates, que l'on fera réagir avec une ou plusieurs diamines ou polyamines; on peut pour cela opérer dans un système où les diamines et/ou polyamines sont solubilisées dans la phase polaire, les diisocyanates et/ou polyisocyanates étant quant à eux solubilisés dans la phase huileuse, ou opérer dans un système où les diisocyanates et/ou polyisocyanates sont solubilisées dans la phase polaire (nécessairement exempte d'eau dans ce cas), les diamines et/ou polyamines étant quant à elles solubilisées dans la phase huileuse.

Dans le premier cas (diamines et/ou polyamines solubilisées dans la phase polaire), on choisira des diamines ou polyamines telles que les polyoxypropylènediamines (par exemple les Jeffamine^{®} D-230, Jeffamine^{®} D-400, PC Amine DA 250 et PC Amine DA 400) et l'hexaméthylènediamine, ou encore des diamines ou polyamines aromatiques telles que la 2,4,6-triaminopyrimidine. On choisira par ailleurs des diisocyanates ou polyisocyanates aliphatiques qui sont solubles ou diluables dans la phase huileuse, alors que des diisocyanates ou polyisocyanates aromatiques y seraient strictement insolubles.

Dans le second cas (diamines et/ou polyamines solubilisées dans la phase huileuse), les diisocyanates et/ou polyisocyanates pourront être choisis parmi les composés aliphatiques, tandis que les diamines et/ou polyamines seront par exemple l'éthylènediamine, la diéthylènetriamine ou des diamines et/ou polyamines comme les Jeffamine^{®}.

Il est donc possible, dans le procédé selon l'invention, d'inverser le lieu de séjour de réactifs appartenant respectivement à deux familles chimiques distinctes données, et ceci s'applique en particulier lorsque l'on travaille sur des polycondensats de type polyurée.

Lorsque la phase polaire contient un solvant organique mélangé à de l'eau, il est possible de ne mettre aucun réactif R¹ dans la phase polaire et de former des microbilles en polyurée par l'utilisation de diisocyanates et/ou polyisocyanates introduits dans la phase huileuse. En effet, ces composés, une fois qu'ils ont pénétré dans les gouttelettes de phase polaire, subissent, pour une part de leurs fonctions isocyanates, une réaction d'hydrolyse, qui a pour effet la libération de dioxyde de carbone et la formation de fonctions amines constituant in situ le réactif R¹, capables alors de réagir sur les fonctions isocyanates encore présentes, ce qui conduit à un polyurée. Ce système de polycondensation in situ peut être utilisé seul ou en association avec le procédé de polycondensation décrit précédemment et conduisant à la formation de polyurée en présence de diamines et/ou polyamines dans la phase polaire et de diisocyanates et/ou polyisocyanates dans la phase huileuse, ou de polyuréthane en présence de diols et/ou polyols dans la phase polaire et de diisocyanates et/ou polyisocyanates dans la phase huileuse, la part de chaque type de réaction étant régie par les proportions respectives de réactifs dans chacune des phases.

Les diols et polyols étant moins réactifs que les diamines et polyamines, il peut s'avérer nécessaire, pour la fabrication de microbilles en polyuréthane, d'introduire dans l'une des phases un catalyseur usuel connu pour favoriser la polycondensation tel que, par exemple, le diazabicyclo[2,2,2]octane.

Le rapport massique des phases polaire (ϕₚ)/huileuse (ϕₕ) peut varier entre 10/90 et 70/30.

Le rapport molaire entre les fonctions des réactifs R¹ et R² respectivement introduits dans la phase polaire et dans la phase huileuse peut aller de 1 /100 à 10/1; il est de préférence compris entre 1/20 et 3/1.

La proportion massique de polycondensat dans la microbille est généralement comprise entre 10 % et 90 %.

La proportion massique de pesticide qui peut être encapsulée par le procédé selon la présente invention peut varier dans de larges limites; dans le cas du méthomyl elle peut aller de 1 % à 27 %.

Dans certaines conditions, et notamment lorsque l'on veut préparer une formule contenant une faible proportion de polymère dans la microbille et/ou une forte proportion de méthomyl, il peut être judicieux d'introduire dans la phase polaire un sel hydrosoluble comme, par exemple, le thiocyanate de sodium, le thiocyanate de potassium, l'acétate de sodium ou le chlorure de sodium, de préférence le thiocyanate de sodium. Un acide minéral comme, par exemple, l'acide chlorhydrique (HCl), l'acide bromhydrique (HBr) ou l'acide iodhydrique (Hl) peut également être ajouté dans la phase polaire contenant ou non le sel hydrosoluble, pour faciliter le cas échéant la remise en émulsion aqueuse ultérieure de la suspension huileuse de microbilles.

Pour réaliser la dispersion de la phase polaire dans la phase continue huileuse, on choisira des tensio-actifs anioniques ou non-ioniques, seuls ou en mélange, de sorte que le HLB résultant soit approprié à la formation de la dispersion (HLB généralement compris entre 1,8 et 8). Les tensio-actifs utilisables pour obtenir le HLB désiré peuvent être choisis plus particulièrement parmi les esters de sorbitan et leurs dérivés éthoxylés tels que ceux commercialisés par la société WITCO sous les dénominations Sorban^{®} et Sorbanox^{®} ou par la société UNIQEMA sous les dénominations Span^{®} et Tween^{®}, les alcools gras éthoxylés tels que ceux commercialisés par la société UNIQEMA sous la dénomination Synperonic^{®}, les poly(vinylpyrrolidones) alkylées telles que celles commercialisées par la société ISP Investments sous la dénomination Agrimer^{®} AL, et les copolymères blocs tels que ceux commercialisés par la société UNIQEMA sous les dénominations Hypermer^{®} et Atlox^{®}.

La quantité de tensio-actif ou de mélange de tensio-actifs peut varier dans de larges limites en fonction de l'ensemble des différents paramètres du système réactionnel. Cette quantité varie généralement de 1 à 15 % en poids de la formule.

La taille des gouttelettes dispersées résulte de l'ensemble des paramètres fixés dans le procédé, notamment la proportion de chacune des phases, la qualité et quantité du ou des tensio-actifs, la température, la vitesse d'agitation. L'examen au microscope optique montre que les microbilles sont sphériques et bien individualisées. Le diamètre final des microbilles, également régi par cet ensemble de paramètres, peut aller jusqu'à 50 µm et est, de préférence, compris entre 0,5 et 20 µm. L'analyse par granulomètrie laser en phase huile montre que la distribution des tailles est de type gaussien.

La température à laquelle est effectuée la fabrication de la suspension de microbilles est en général la température ambiante, mais il est possible de travailler à une température plus haute (jusqu'à 65°C) en fonction de la nature des tensio-actifs utilisés pour la réalisation de la dispersion. Il est également possible de moduler la température au cours du procédé, par exemple en réalisant la dispersion à température ambiante puis en menant la polycondensation à une température supérieure, ce qui a pour effet d'accélérer la réaction de polycondensation.

Pourvu qu'il ne conduise pas à la détérioration des microbilles formées ou en cours de formation (cassage, broyage, déformation, etc ...), tout système d'agitation mécanique peut convenir pour mener à bien la dispersion puis la polycondensation aboutissant à la fabrication de la suspension de microbilles. Toutefois, mais seulement pour la mise en dispersion (étape b), on peut utiliser un autre système d'agitation, par exemple un disperseur rapide à cage du type Ultraturax^{®} de la société IKA.

Dans le cas où la phase polaire comprend du méthanol, seul ou en mélange avec de l'eau, la réaction doit être menée dans des conditions permettant l'évaporation totale du méthanol au cours de la fabrication de la suspension de microbilles et il peut être judicieux, dans ce cas, d'accélérer le processus en chauffant le mélange à une température adéquate. Ce système se prête particulièrement bien à la fabrication de dispersions très concentrées (20 à 27 %) en méthomyl.

Il n'est pas indispensable d'ajouter à quelque moment que ce soit un agent de dispersion pour prévenir et empêcher la coalescence et l'agglomération des microbilles formées au cours du procédé selon l'invention. L'incorporation d'un tel agent est néanmoins possible et, dans cas, on pourra utiliser par exemple les composés solides finement divisés décrits dans le brevet US 3 575 882.

La suspension de microbilles obtenue conformément au procédé selon l'invention peut être utilisée telle quelle pour la protection des cultures ou pour la préparation de diverses formulations utiles pour la protection des cultures. Si on le désire, on peut soumettre la suspension de microbilles à un lavage afin d'éliminer les impuretés et le pesticide qui n'aurait pas été encapsulé dans les microbilles. On peut également filtrer la suspension, cette opération pouvant éventuellement être précédée ou suivie d'un lavage.

Si on le souhaite, on peut ajouter à la suspension de microbilles un ou plusieurs agents épaississants tels que, par exemple, des argiles ou des silices, pour obtenir une formule légèrement visqueuse, fluide et aisément manipulable, stable dans le temps. On peut également ajouter à la suspension un agent anti-sédimentation et/ou un agent anti-agglomération et/ou un agent anti-microbien.

Selon le mode d'application désiré, les suspensions de microbilles selon l'invention peuvent être utilisées:
- en l'état (sans dilution préalable) ;
- diluées dans une huile ou tout autre support utilisable pour les traitements de type bas, très bas volume, thermonébulisation, aérosol ;
- réémulsionnées dans de l'eau, cette réémulsion se faisant à l'aide d'un ou plusieurs tensio-actifs introduit(s) dans l'eau avant la suspension ou bien dans la suspension elle-même avant son mélange avec l'eau de réémulsion.

Le ou les tensio-actifs peuvent également être incorporés dans les suspensions de microbilles et avant embidonnage afin de réaliser des formules prêtes à l'emploi utilisables avec ou sans réémulsion. Une telle formulation peut être avantageusement conditionnée dans des emballages hydrosolubles.

### EXEMPLES

Pour la réalisation des exemples suivants qui illustrent l'invention sans la limiter, on a utilisé les produits commerciaux suivants:
- Agrimer^{®} AL 22 = poly(vinylpyrrolidone) alkylée avec l'hexadécène (rapport en poids VP/C₁₆H₃₂ = 20/80), de masse molaire égale à 3130 ± 40, connue sous le numéro CAS 63232-81-0 et commercialisée par ISP Investments, Inc.
- Desmodur^{®} Z 4470 SN = polyisocyanate aliphatique à base d'isophorone-diisocyanate (IPDI) commercialisé par la société BAYER, de masse molaire égale à environ 667 et de teneur en NCO égale à 11,9 ± 0,4 % (norme DIN EN ISO 11909)
- Hypermer^{®} E 476 = agent tensio-actif non ionique polymère commercialisé par la société UNIQEMA
- Jeffamine^{®} 400 = polyoxypropylènediamine de structure:
   H₂N-CH(CH₃)-CH₂-[O-CH₂-CH(CH₃)]ₓ-NH₂ avec x = 5,6
   connue sous le numéro CAS 9046-10-0 et commercialisée par la société HUNTSMAN Corporation
- Marcol^{®} 52 = huile blanche médicinale commercialisée par la société ESSO (masse volumique à 20°C: 825-845 kg/m³; viscosité cinématique à 40°C: 7-8 mm²/s; classement FDA: a)
- Huile 90 Neutral = huile paraffinique commercialisée par la société MOBIL OIL (masse volumique à 15°C: 820-835 kg/m³; viscosité cinématique à 100°C: 3,8-4,2 mm²/s)

### EXEMPLE 1

### A. Préparation de chacune des phases

Phase polaire: Dans un bécher de 50 ml, on mélange 10,2 g de méthanol, 4 g d'acide chlorhydrique 0,72%, 1,6 g de Jeffamine^{®} 400, 0,46 g de 2,4,6-triaminopyrimidine (TAP) et 3,80 g de méthomyl, et on homogénéise la phase sous agitation magnétique.

Phase huileuse 1: Dans un bécher de 400 ml, on mélange 45,28 g d'huile 90 Neutral et 3,80 g de poly(vinylpyrrolidone) alkylée Agrimer^{®} AL 22, et on homogénéise la phase.

Phase huileuse 2: Dans un bécher de 100ml, on introduit 7,24g d'huile 90 Neutral, 3,4 g de poly(vinylpyrrolidone) alkylée Agrimer^{®} AL 22, 27,44 g d'isophorone diisocyanate (IPDI), et 5,88 g de polyisocyanate Desmodur^{®} Z 4470 SN, et on homogénéise la phase.

### Solubilités:

La solubilité de R² (mélange IPDI et Desmodur^{®} Z 4470 SN) est de l'ordre de 1 à 5% en poids dans la phase polaire.

La solubilité de R¹ (mélange Jeffamine^{®} 400 et TAP) est de l'ordre de 0% en poids dans le solvant (S).

### B. Dispersion puis encapsulation

Sous agitation mécanique à une vitesse d'environ 1000 tr/min, on verse la phase polaire dans la phase huileuse 1. Une dispersion se forme très rapidement et, après 8 à 10 minutes d'agitation et tout en maintenant celle-ci, on verse la phase huileuse 2 dans la dispersion. On laisse la réaction se faire jusqu'à ce que la polymérisation soit terminée et tout le méthanol évaporé. A la suspension de microbilles obtenues, on ajoute ensuite 10 % en poids d'une solution huileuse de bentone à 10 % et on agite vigoureusement.

On obtient une suspension huileuse de microbilles de méthomyl, stable dans le temps. L'examen à l'aide d'un microscope à balayage électronique équipé d'un système cryogénique montre que les particules sont pleines et homogènes dans leur masse; aucune paroi différenciée n'est visible. Le méthomyl est réparti également dans l'ensemble des microbilles. Cette suspension (ci-après Suspension n° 1) présente les caractéristiques suivantes:
- taux de méthomyl: 3,3 % en poids
- taux de polymère dans les microbilles: 82,0 % en poids
- diamètre moyen des microbilles: 5-9 µm

### EXEMPLE 2

### A. Préparation de chacune des phases

Phase polaire: Dans un bécher de 50 ml, on mélange 20,2 g de méthanol, 4 g d'eau, 1,6 g de Jeffamine^{®} 400, 0,46 g de 2,4,6-triaminopyrimidine (TAP), 4 g de thiocyanate de sodium et 18 g de méthomyl, et on homogénéise la phase sous agitation magnétique.

Phase huileuse 1: Dans un bécher de 400 ml, on mélange 31,28 g d'huile 90 Neutral et 3,60 g de poly(vinylpyrrolidone) alkylée Agrimer^{®} AL 22, et on homogénéise la phase.

Phase huileuse 2: Dans un bécher de 100 ml, on introduit 5,49 g d'isophorone diisocyanate (IPDI), puis 1,18 g de polyisocyanate Desmodur^{®} Z 4470 SN, et on homogénéise la phase.

### Solubilités:

La solubilité de R² (mélange IPDI et Desmodur^{®} Z 4470 SN) est de l'ordre de 1 à 5% en poids dans la phase polaire.

La solubilité de R¹ (mélange Jeffamine^{®} 400 et TAP) est de l'ordre de 0% en poids dans le solvant (S).

### B. Dispersion puis encapsulation

Sous agitation mécanique à une vitesse d'environ 800 tr/min, on verse la phase polaire dans la phase huileuse 1. Une dispersion se forme très rapidement et, après 5 minutes d'agitation et tout en maintenant celle-ci, on verse la phase huileuse 2 dans la dispersion. On laisse la réaction se faire jusqu'à ce que la polymérisation soit terminée et tout le méthanol évaporé. A la suspension de microbilles obtenues, on ajoute ensuite 10 % en poids d'une solution huileuse de bentone à 10 % et on agite vigoureusement.

On obtient une suspension huileuse de microbilles de méthomyl, stable dans le temps. Cette suspension (ci-après Suspension n° 2) présente les caractéristiques suivantes:
- taux de méthomyl : 23,3 % en poids
- taux de polymère dans les microbilles: 25,1 % en poids
- diamètre moyen des microbilles: 1-2 µm

Au lieu d'introduire successivement les phases huileuses 1 et 2, la réaction peut être menée dans d'excellentes conditions en mélangeant initialement les phases huileuses 1 et 2, puis en ajoutant à la phase ainsi obtenue la phase polaire. On obtient également une suspension huileuse de microbilles de méthomyl, stable dans le temps.

### EXEMPLE 3

### A. Préparation de chacune des phases

Phase polaire: Dans un bécher de 50 ml, on mélange 14,2 g de méthanol, 1,6 g de

Jeffamine^{®} 400, 0,46 g de 2,4,6-triaminopyrimidine (TAP), 3 g de thiocyanate de sodium et 12 g de méthomyl, et on homogénéise la phase sous agitation magnétique.

Phase huileuse 1: Dans un bécher de 400 ml, on mélange 30 g d'huile Marcol^{®} 52 et 3,6 g de poly(vinylpyrrolidone) alkylée Agrimer^{®} AL 22, et on homogénéise la phase.

Phase huileuse 2: Dans un bécher de 100 ml, on introduit 2,74 g d'isophorone diisocyanate (IPDI), puis 0,59 g de polyisocyanate Desmodur^{®} Z 4470 SN, et on homogénéise la phase.

### Solubilités:

La solubilité de R² (mélange IPDI et Desmodur^{®} Z 4470 SN) est de l'ordre de 1 à 5% en poids dans la phase polaire.

La solubilité de R¹ (mélange Jeffamine^{®} 400 et TAP) est de l'ordre de 0% en poids dans le solvant (S).

### B. Dispersion puis encapsulation

Sous agitation mécanique à une vitesse d'environ 700 tr/min, on verse la phase polaire dans la phase huileuse 1. Une dispersion se forme très rapidement et, après 3 à 5 minutes d'agitation et tout en maintenant celle-ci, on verse la phase huileuse 2 dans la dispersion. On laisse la réaction se faire jusqu'à ce que la polymérisation soit terminée et tout le méthanol évaporé. A la suspension de microbilles obtenues, on ajoute ensuite 10 % en poids d'une solution huileuse de bentone à 10 % et on agite vigoureusement.

La réaction peut également être menée dans d'excellentes conditions en mélangeant initialement les phases huileuses 1 et 2 puis en ajoutant à la phase ainsi obtenue la phase polaire.

Dans un cas comme dans l'autre, on obtient une suspension huileuse de microbilles de méthomyl, stable dans le temps, présentant les caractéristiques suivantes:
- taux de méthomyl : 20,0 % en poids
- taux de polymère dans les microbilles: 26,4 % en poids
- diamètre moyen des microbilles: 0,5-1 µm

### EXEMPLE 4

### A . Préparation de chacune des phases

Phase polaire: Dans un bécher de 50 ml, on mélange 14,2 g de diméthylsulfoxyde, 1,6 g de Jeffamine^{®} 400, 0,46 g de 2,4,6-triaminopyrimidine (TAP), 1 g de thiocyanate de sodium et 12 g de méthomyl, et on homogénéise la phase sous agitation magnétique.

Phase huileuse 1: Dans un bécher de 400 ml, on mélange 32 g d'huile Marcol^{®} 52 et 2,5 g d' Hypermer^{®} E 476, et on homogénéise la phase.

Phase huileuse 2: Dans un bécher de 100 ml, on introduit 10,98 g d'isophorone diisocyanate (IPDI), puis 2,36 g de polyisocyanate Desmodur^{®} Z 4470 SN, et on homogénéise la phase.

### Solubilités:

La solubilité de R² (mélange IPDI et Desmodur^{®} Z 4470 SN) est de l'ordre de 100% en poids dans la phase polaire.

La solubilité de R¹ (mélange Jeffamine^{®} 400 et TAP) est de l'ordre de 0% en poids dans le solvant (S).

### B. Dispersion puis encapsulation

Sous agitation mécanique à une vitesse d'environ 850 tr/min, on verse la phase polaire dans la phase huileuse 1. Une dispersion se forme très rapidement et, après 10 minutes d'agitation et tout en maintenant celle-ci, on verse la phase huileuse 2 dans la dispersion. On laisse la réaction se faire jusqu'à ce que la polymérisation soit terminée, puis à la suspension de microbilles ainsi obtenues, on ajoute 10 % en poids d'une solution huileuse de bentone à 10 % et on agite vigoureusement._{.}

La réaction peut également être menée dans d'excellentes conditions en mélangeant initialement les phases huileuses 1 et 2 puis en ajoutant à la phase ainsi obtenue la phase polaire.

Dans un cas comme dans l'autre, on obtient une suspension huileuse de microbilles de méthomyl, stable dans le temps, présentant les caractéristiques suivantes:
- taux de méthomyl : 14,0 % en poids
- taux de polymère dans les microbilles: 36,2 % en poids
- diamètre moyen des microbilles: 3-5 µm

Si dans les exemples 1 à 4 on remplace la Jeffamine^{®} 400 par la PC Amine DA 400 commercialisée par la société ARNAUD PROMECOME, on obtient exactement les mêmes suspensions de microbilles.

### EXEMPLE 5

### A. Préparation de chacune des phases

Phase polaire: Dans un bécher de 100 ml, on mélange 18,5 g de DMSO, 13,5 g de butylglycol, 2 g d'eau, 2,4 g de thiocyanate de sodium, 13,5 g de méthomyl et 0,05 g de diazabicyclo[2,2,2]octane et on homogénéise la phase sous agitation magnétique.

Phase huileuse 1: Dans un bécher de 400 ml, on mélange 50 g d'huile Marcol^{®} 52 et 3 g de poly(vinylpyrrolidone) alkylée Agrimer^{®} AL 22, et on homogénéise la phase.

Phase huileuse 2: Dans un bécher de 10 ml, on introduit 6,8 g d'hexaméthylène diisocyanate (HMDI).

### Solubilités:

La solubilité de R² (HMDI) est de l'ordre de 100% en poids dans la phase polaire.

La solubilité de R¹ (butylglycol) est de l'ordre de 60% en poids dans le solvant (S).

### B. Dispersion puis encapsulation

Sous agitation mécanique à une vitesse d'environ 700 tr/min, on verse la phase polaire dans la phase huileuse 1. Une dispersion se forme très rapidement et, après 2 à 3 minutes d'agitation et tout en maintenant celle-ci, on verse la phase huileuse 2 dans la dispersion. On laisse la réaction se faire jusqu'à ce que la polymérisation soit terminée. A la suspension de microbilles obtenues, on ajoute ensuite 10 % en poids d'une solution huileuse de bentone à 10 % et on agite vigoureusement.

On obtient une suspension huileuse de microbilles de méthomyl, stable dans le temps, présentant les caractéristiques suivantes:
- taux de méthomyl : 11,1 % en poids
- taux de polymère dans les microbilles: 12,0 % en poids
- diamètre moyen des microbilles: 8-10 µm

### EXEMPLE 6: Utilisation des suspensions de microbilles de méthomyl

L'intérêt et l'efficacité biologique des formulations basées sur des suspensions de microbilles de méthomyl selon l'invention ont été évalués. La cible choisie est une noctuelle du chou, dénommée "Mamestra Brassicae". Les choux sont traités avec des bouillies préparées à partir des formules de microbilles de méthomyl. Après séchage, des chenilles "Mamestra Brassicae" sont déposées sur des feuilles de chou qui ont été prélevées et mises dans des boîtes. 24h et 48h après l'infestation, on note le nombre de chenilles vivantes. De nouvelles infestations sont réalisées quotidiennement sur des feuilles de chou prélevées au fur et à mesure. On peut ainsi évaluer la durée d'action et l'efficacité des différentes formules, comparées à un témoin non traité et à une référence (en l'occurrence, le Lannate^{®} 20L).

Les essais se déroulent en plusieurs phases selon la méthodologie décrite ci-dessous:
- réception et traitement des choux
- réception et fin d'incubation des chenilles
- infestations quotidiennes
- notations
- analyse

### 1. Traitement des choux

Les choux sont réceptionnés et rempotés dans des pots de dimensions 11 x 11 cm de telle sorte qu'ils aient une dizaine de feuilles au début de l'essai. En cas d'attaque de piérides, on peut réaliser un traitement insecticide de faible rémanence et au moins 15 jours avant le début de l'essai.

Pour 10 infestations, 6 modalités, 6 répétitions, il faut 360 feuilles et,si on compte 3 feuilles à prélever par chou, il faut 120 choux.

Le traitement des choux est réalisé dans une tour de pulvérisation à la dose de 800l/ha d'une bouillie permettant d'appliquer 60 à 200 g de méthomyl à l'hectare.

Cette bouillie est préparée comme suit: Dans une éprouvette graduée, on introduit 1/4 de la quantité d'eau nécessaire et un système tensio-actif permettant d'émulsionner la suspension de microbilles. On agite ce mélange, puis on ajoute la quantité adéquate de la suspension de microbilles et on agite vigoureusement. On complète ensuite avec de l'eau en quantité suffisante et, si nécessaire, on ajoute quelques gouttes d'antimousse. On ajuste le niveau au volume exact et on agite la bouillie qui est alors prête à être pulvérisée.

La bouillie de Lannate^{®} 20L est préparée de la façon suivante : dans les 3/4 de la quantité d'eau nécessaire, on introduit la quantité voulue de Lannate^{®} 20L ainsi qu'un agent mouillant, puis on complète en eau au volume désiré.

### 2. Réception des chenilles

Les chenilles arrivent sous formes d'oeufs déposés sur des feuilles de papier. A réception, ces feuilles sont à mettre à 15°C ou à 25°C selon la date d'éclosion prévue. L'essai est réalisé avec des chenilles au stade L1, c'est à dire que l'on procède aux infestations le jour de l'éclosion des chenilles.

### 3. Les infestations

Par infestation on entend le fait de mettre les chenilles en contact avec les feuilles de choux traités. L'infestation est réalisée dans des boîtes transparentes avec couvercle, de dimensions 17,5 x 11,5 x 6,5cm. Chaque boîte est une parcelle élémentaire. Dans une boîte on dispose une feuille de chou et, à l'aide d'un pinceau, on dépose 8 chenilles sur cette feuille. Les boîtes sont disposées en carré latin en salle climatisée. On éclaire les boîtes 16h par jour et on maintient une température de 20°C à l'intérieur de celles-ci.

Les infestations ont lieu de façon quotidienne, la première étant effectuée le jour même du traitement des choux (J0) ou le lendemain (J1) et les autres 2 ou 6 jours après le traitement (respectivement infestations J2 et J6).

### 4. Les notations

On réalise 1 observation 48 heures après l'infestation. On dénombre alors dans chaque boîte le nombre de chenilles vivantes. A l'issue de cette notation, les feuilles et les chenilles sont jetées, et les boîtes lavées.

### 5. Résultats

Les tableaux ci-dessous résument les résultats de deux essais biologiques réalisés en serre. Après transformation des données en log (x+1 ), une analyse de variance est réalisée. Elle est suivie d'un test de Newman et Keuls, qui permet la classification statistique des différentes modalités.

**Tableau 1 : Résultats du premier essai**

| Produit | Dose de méthomyl à l'hectare | Nombre moyen de chenilles vivantes par boite, 48 heures après l'infestation | | | | |
|---|---|---|---|---|---|---|
| | | Infestation J0 | | Infestation J2 | Infestation J6 | |
| aucun (témoin) | - | 6,5 | a* | 7 | 5,5 | a* |
| Lannate^{®} 20L | 200 g | 0 | b | 3,8 | 4 | a |
| Suspension n°1 | 200 g | 0 | b | 1 | 0,7 | b |
| Suspension n°1 | 60 g | 0,2 | b | 1,3 | 3,7 | a |
| Suspension n°1 + Suspension n°2 | 60 g + 140 g | 0 | b | 1 | 0,7 | b |

| | | | | | | |
|---|---|---|---|---|---|---|
| • signification statistique : les moyennes qui ne portent pas de lettres communes diffèrent significativement au seuil de 5 %. | | | | | | |

**Tableau 2 : Résultats du second essai**

| Produit | Dose de méthomyl à l'hectare | Nombre moyen de chenilles vivantes par boite, 48 heures après l'infestation | | | | | |
|---|---|---|---|---|---|---|---|
| | | Infestation J 1 | | Infestation J2 | | Infestation J6 | |
| aucun (témoin) | - | 8 | a* | 7,7 | a* | 7,8 | a* |
| nnate^{®} 20L | 200 g | 0 | b | 3,2 | c | 7,8 | a |
| Suspension n°1 | 200 g | 0,2 | b | 0 | d | 0,3 | d |
| Suspension n°2 | 200 g | 0,5 | b | 4,7 | b | 6 | c |
| Suspension n°2 | 140 g | 0,5 | b | 5,5 | ab | 6,3 | bc |

| | | | | | | | |
|---|---|---|---|---|---|---|---|
| * signification statistique: les moyennes qui ne portent pas de lettres communes diffèrent significativement au seuil de 5 %. | | | | | | | |

Les résultats de ces essais montrent l'intérêt de la Suspension n°1 et de son association avec la Suspension n°2, utilisées l'une et l'autre à la dose de 200 g de méthomyl à l'hectare. Ces formules permettent d'obtenir rapidement une bonne efficacité insecticide et une excellente persistance d'action.

## Revendications

1. Procédé de fabrication de microbilles d'un pesticide au moins partiellement soluble dans l'eau par polycondensation de réactifs organiques complémentaires R¹ et R² dans un système biphasique liquide, le ou les réactif(s) R¹ étant placé(s) avec le pesticide dans une phase liquide polaire (ϕₚ) et le ou les réactif(s) R² étant placé(s) dans une phase liquide huileuse (ϕₕ) comprenant un solvant (S) non miscible à la phase polaire et au moins un agent tensio-actif permettant sous agitation la mise en dispersion de la phase polaire (ϕₚ) dans ladite phase huileuse (ϕₕ), **caractérisé en ce que** le couple de réactifs R¹ et R² est choisi de telle sorte que la polycondensation se produit dans la phase liquide polaire (ϕₚ).

2. Procédé selon la revendication 1 dans lequel :
(a) la solubilité du ou des réactif(s) R² dans la phase liquide polaire (ϕₚ) est supérieure à la solubilité du ou des réactif(s) R¹ dans le solvant (S).
(b) la vitesse de migration du ou des réactif(s) R² est telle que la polycondensation se produit au sein de la phase liquide polaire (ϕₚ).

3. Procédé selon la revendication 1 ou 2 qui consiste :
(a) à préparer une phase liquide polaire (ϕₚ) en mélangeant le pesticide et le ou les réactif(s) R¹ dans l'eau et/ou un solvant polaire, puis
(b) à disperser sous agitation cette phase liquide polaire (ϕₚ) dans une solution huileuse (ϕₕ₁) du ou des agent(s) tensio-actif(s) dans le solvant (S) non miscible à la phase polaire, et
(c) à introduire dans la dispersion agitée une solution huileuse (ϕₕ₂) du ou des réactif(s) R² provoquant ainsi la polycondensation.

4. Procédé selon l'une des revendications 1 à 3 dans lequel le solvant (S) est une huile végétale ou minérale, de préférence une huile aliphatique et, plus particulièrement une huile blanche non aromatique.

5. Procédé selon l'une des revendications 1 à 4 dans lequel le solvant polaire est le méthanol, l'éthanol, le diméthylsulfoxyde, la N-méthylpyrrolidone, les esters dibasiques (DBE), ou un mélange de ces composés entre eux et/ou avec l'eau, de préférence le méthanol seul ou en mélange avec l'eau.

6. Procédé selon l'une des revendications 1 à 5 dans lequel l'agent tensio-actif est une poly(vinylpyrrolidone) alkylée, de préférence une poly(vinylpyrrolidone) alkylée par l'hexadécène.

7. Procédé selon l'une des revendications 1 à 6 dans lequel les réactifs R¹ et R² sont aptes à former un polycondensat choisi parmi les polyamides, les polysulfonamides, les polycarbonates, les polyesters, les polyuréthanes et les polyurées, de préférence un polyuréthane ou une polyurée.

8. Procédé selon la revendication 7 dans lequel le polycondensat est une polyurée formée à partir d'un mélange R¹ de di- et/ou triamines dans la phase polaire et d'un mélange R² de di- et/ou tri-isocyanates aliphatiques dans la phase huileuse, l'un au moins des mélanges R¹ et R² comprenant de préférence un composé trifonctionnel.

9. Procédé selon l'une des revendications 1 à 8 dans lequel le rapport massique des phases polaire/huileuse varie entre 10/90 et 70/30.

10. Procédé selon l'une des revendications 1 à 9 dans lequel le rapport molaire entre les fonctions des réactifs R¹ et R² est compris entre 10/1 et 1 /100, de préférence entre 3/1 et 1/20.

11. Procédé selon l'une des revendications 1 à 10 dans lequel la proportion massique d'agent tensio-actif dans la formulation est comprise entre 1 et 10 %, de préférence entre 2 et 8 %.

12. Procédé selon l'une des revendications 1 à 11 dans lequel la phase polaire contient en outre un sel hydrosoluble, de préférence le thiocyanate de sodium.

13. Procédé selon l'une des revendications 1 à 12 comprenant en outre au moins une étape de concentration.

14. Procédé selon l'une des revendications 1 à 13 comprenant en outre une étape d'addition d'un épaississant et/ou d'un agent anti-sédimentation et/ou d'un agent anti-agglomération et/ou d'un agent anti-microbien.

15. Procédé selon l'une des revendications 1 à 14 dans lequel le pesticide est un insecticide, de préférence le méthomyl.

## Claims

1. Process for the manufacture of microbeads of an at least partially water-soluble pesticide by poly condensation of complementary organic reagents R¹ and R² in a liquid two-phase system, the reagent(s) R¹ being placed with the pesticide in a polar liquid phase (ϕₚ) and the reagent(s) R² being placed in an oily liquid phase (ϕₕ) comprising a solvent (S) that is immiscible with the polar phase and at least one surfactant for dispersing the polar phase (ϕₚ) in the said oily phase (ϕₕ) with stirring, **characterized in that** the pair of reagents R¹ and R² is chosen in such a way that the polycondensation occurs in the polar liquid phase (ϕₚ).

2. Process according to claim 1, in which:
- (a) the solubility of the reagent(s) R² in the polar liquid phase (ϕₚ) is greater than the solubility of the reagent(s) R¹ in the solvent (S);
- (b) the migration rate of the reagent(s) R² is such that the polycondensation occurs in the polar liquid phase (ϕₚ).

3. Process according to claim 1 or 2, which comprises:
(a) preparing a polar liquid phase (ϕₚ) by mixing the pesticide and the reagent(s) R' in water and/or a polar solvent, and then
(b) dispersing this polar liquid phase (ϕₚ) in an oily solution (ϕₕ₁) of the surfactant(s) in the solvent (S) that is immiscible with the polar phase, with stirring, and
(c) introducing into the stirred dispersion an oily solution (ϕₕ₂) of the reagent(s) R², thus bringing about the polycondensation.

4. Process according to any one of claims 1 to 3, in which the solvent (S) is a plant or mineral oil, preferably an aliphatic oil, and more particularly a non-aromatic white oil.

5. Process according to any one of claims 1 to 4, in which the polar solvent is methanol, ethanol, dimethyl sulphoxide, N-methylpyrrolidone, dibasic esters (DBE) or a mixture of these compounds with each other and/or with water, preferably methanol alone or mixed with water.

6. Process according to any one of claims 1 to 5, in which the surfactant is an alkylated poly(vinylpyrrolidone), preferably a poly(vinylpyrrolidone) alkylated with hexadecene.

7. Process according to any one of claims 1 to 6, in which the reagents R¹ and R² are capable of forming a polycondensate chosen from polyamides, polysulphonamides, polycarbonates, polyesters, polyurethanes and polyureas, preferably a polyurethane or a polyurea.

8. Process according to claim 7, in which the polycondensate is a polyurea formed from a mixture R¹ of diamines and/or triamines in the polar phase and from a mixture R² of aliphatic diisocyanates and/or triisocyanates in the oily phase, at least one of the mixtures R¹ and R² comprises a trifunctional compound.

9. Process according to any one of claims 1 to 8, in which the mass ratio of the polar phase to the oily phase ranges between 10/90 and 70/30.

10. Process according to any one of claims 1 to 9, in which the molar ratio between the functions of the reagents R¹ and R² is between 10/1 and 1/100, preferably between 3/1 and 1/20.

11. Process according to any one of claims 1 to 10, in which the mass proportion of surfactant in the formulation is between 1% and 10%, preferably between 2 and 8 %.

12. Process according to any one of claims 1 to 11, in which the polar phase also contains a water-soluble salt, preferably sodium thiocyanate.

13. Process according to any one of claims 1 to 12, also comprising at least one concentration step.

14. Process according to any one of claims 1 to 13, also comprising a step of adding a thickener and/or an anti-sedimentation agent and/or an anti-aggregation agent and/or an antimicrobial agent.

15. Process according to any one of claims 1 to 10, in which the pesticide is an insecticide, preferably methomyl.

## Patentansprüche

1. Verfahren zum Herstellen von Mikrokugeln eines Pestizids das mindestens teilweise in Wasser löslich ist, durch Polykondensation von komplementären organischen Reagenzien R¹ und R² in einem flüssigen zweiphasigen System, wobei die Reagenzie(n) R¹ mit dem Pestizid in einer polaren flüssigen Phase (ϕₚ) angeordnet werden und die Reagenzie(n) R² in einer öligen flüssigen Phase (ϕₕ) angeordnet werden, umfassend ein Lösemittel (S), das nicht mit der polaren Phase mischbar ist, und mindestens ein Tensid, das unter Rühren die Dispersion der polaren Phase (ϕₚ) in der öligen Phase (ϕₕ) ermöglicht, **dadurch gekennzeichnet, dass** das Reagenzienpaar R¹ und R² derart ausgewählt ist, dass die Polykondensation in der polaren flüssigen Phase (ϕₚ) stattfindet.

2. Verfahren nach Anspruch 1, wobei:
(a) die Löslichkeit der Reagenzie(n) R² in der polaren flüssigen Phase (ϕₚ) größer ist als die Löslichkeit der Reagenzie (n) R¹ in dem Lösemittel (S).
(b) die Migrationsgeschwindigkeit der Reagenzie(n) R² derart ist, dass die Polykondensation innerhalb der polaren flüssigen Phase (ϕₚ) stattfindet.

3. Verfahren nach Anspruch 1 oder 2, das darin besteht:
(a) eine polare flüssige Phase (ϕₚ) herzustellen, indem das Pestizid und die Reagenzie(n) R¹ in Wasser und/oder einem polaren Lösemittel gemischt werden, dann
(b) diese polare flüssige Phase (ϕₚ) in einer öligen Lösung (ϕₕ₁) des Tensids oder der Tenside, in dem Lösemittel (S), das nicht mit der polaren Phase mischbar ist, unter Rühren zu dispergieren, und
(c) in die gerührte Dispersion eine ölige Lösung (ϕₕ₂) der Reagenzie(n) R² einzuführen, und **dadurch** die Polykondensation herbeizuführen.

4. Verfahren nach einem der Ansprüche 1 bis 3, wobei das Lösemittel (S) ein pflanzliches oder mineralisches Öl, bevorzugt ein aliphatisches Öl und, insbesondere ein weißes nicht aromatisches Öl ist.

5. Verfahren nach einem der Ansprüche 1 bis 4, wobei das polare Lösemittel Methanol, Ethanol, Dimethylsulfoxid, N-Methylpyrrolidon, dibasische Ester (DBE) oder ein Gemisch aus diesen Verbindungen untereinander und/oder mit Wasser, bevorzugt Methanol allein oder gemischt mit Wasser ist.

6. Verfahren nach einem der Ansprüche 1 bis 5, wobei das Tensid ein alkyliertes Poly(vinylpyrrolidon), bevorzugt ein mit Hexadecen alkyliertes Poly(vinylpyrrolidon) ist.

7. Verfahren nach einem der Ansprüche 1 bis 6, wobei die Reagenzien R¹ und R² in der Lage sind, ein Polykondensat zu bilden, ausgewählt aus den Polyamiden, den Polysulfonamiden, den Polycarbonaten, den Polyestern, den Polyurethanen und den Polyharnsäuren, bevorzugt ein Polyurethan oder ein Polyharnstoff.

8. Verfahren nach Anspruch 7, wobei das Polykondensat ein Polyharnstoff ist, gebildet aus einem Gemisch R¹ aus Di- und/oder Triaminen in der polaren Phase und einem Gemisch R² aus aliphatischen Di- und/oder Triisocyanaten in der öligen Phase, wobei mindestens eines der Gemische R¹ und R² bevorzugt eine trifunktionelle Verbindung umfasst.

9. Verfahren nach einem der Ansprüche 1 bis 8, wobei das Massenverhältnis der polaren/ölförmigen Phasen zwischen 10/90 und 70/30 variiert.

10. Verfahren nach einem der Ansprüche 1 bis 9, wobei das Molverhältnis zwischen den Funktionen der Reagenzien R¹ und R² im Bereich zwischen 10/1 und 1/100, bevorzugt zwischen 3/1 und 1/20 liegt.

11. Verfahren nach einem der Ansprüche 1 bis 10, wobei der Massenanteil des Tensids in der Formulierung im Bereich zwischen 1 und 10 %, bevorzugt zwischen 2 und 8 % liegt.

12. Verfahren nach einem der Ansprüche 1 bis 11, wobei die polare Phase ferner ein wasserlösliches Salz, bevorzugt Natriumthiocyanat, enthält.

13. Verfahren nach einem der Ansprüche 1 bis 12, das ferner mindestens einen Schritt der Konzentration umfasst.

14. Verfahren nach einem der Ansprüche 1 bis 13, das ferner einen Schritt der Zugabe eines Eindickmittels und/oder eines Absetzverhinderungsmittels und/oder eines Antiagglomerationsmittels und/oder eines antimikrobiellen Mittels umfasst.

15. Verfahren nach einem der Ansprüche 1 bis 14, wobei das Pestizid ein Insektizid, bevorzugt Methomyl ist.
